# EUROPEAN PATENT APPLICATION

(11) **EP 2 182 453 A1**
(43) Date of publication of application: **05.05.2010**
(21) Application number: 09170173.0
(22) Date of filing: 14.09.2009
(51) Int. Cl.: G06F 17/30, G06F 21/24

(54) **File search system and file search server device**

(30) Priority: 29.10.2008 JP 2008277567
(71) Applicant: Hitachi Software Engineering Co., Ltd., Shinagawa-ku Tokyo 140-0002 (JP)
(72) Inventor: Imai, Takashi, Tokyo 140-0002 (JP); Matsumoto, Takeshi, Tokyo 140-0002 (JP)
(74) Representative: Liesegang, Eva

(57) **Abstract**

Provided is a mechanism that, when presenting a search result to a user while reducing the load on a file server, sets a file to be accessible to the user only when the user is authorized to access the file and folders of all hierarchical levels. In the case of adapting a search method that includes, under the condition of using a file system having a folder hierarchical structure where the right of access to each folder and file is set, creating an index file for files to be searched for in advance, and searching for a file specified as a search target with reference to the index file, an appropriate right of access to each file and folder is set in creation of the index file, whereby it becomes possible to display as search results only the files that the relevant user is authorized to read.

## Description

### BACKGROUND OF THE INVENTION

### Field of the Invention

The present invention relates to a file search system and a file search server device that constitutes part of the file search system. In particular, the invention relates to a file search system that searches for a file specified as a search target with reference to an index file thereof, and a file search server device.

### Background Art

In recent years, digitalization of information has rapidly progressed. In the past, storage of data, which is intended to be read for the execution of core corporate tasks such as bank accounts or municipal resident cards, into files or DBs (Data Bases) with the computer systems in enterprises or government and municipal offices, for example, has been central to the digitalization.

Nowadays, various documents created in routine work in organizations such as enterprises are stored as document files in a client PC (Personal Computer) of each employee and are sent to other client PCs as documents attached to electronic mail or stored in a file server as shared information across the organization. The document files stored in the file server are read by various employees, and are sometimes copied into client PCs and updated.

When a large volume of digital information is stored in various computers in a distributed manner as described above, it follows that multiple pieces of duplicate or similar digital information would exist in the organization. Further, the size of each stored digital information has been growing.

In the meanwhile, suppose, for example, that a need arises to search for a document file created by an employee who has already retired from an organization. It is often the case that the storage location of the digital information that one intends to read is unknown. In such a case, a method of specifying a keyword or a file creator name that is supposed to be contained in the document file is widely used, so that a document file that contains the specified keyword or the like is searched for.

However, when all of the computers in the organization are searched for digital information, all of the employees need to be authorized to access the client PC of each employee, which is not preferable for security reasons. Therefore, digital information that should be shared across an organization is typically stored in a predetermined file server.

Meanwhile, in a case in which document files and the like are stored in several predetermined file servers, if all of the files stored in such file servers are searched each time a given document file is needed, huge amounts of time would need to be consumed to carry out file I/O (Input/Output) and the like.

To address the aforementioned problems, a technique as disclosed in Reference 1 (JP Patent Publication (Kokai) No. 2003-162545 A), for example, has been known, in which small-size information (index information such as storage locations or keywords) on each record of a CSV (Comma Separated Values) file or the like stored in a file server, which is intended to be used for searches, is stored as an index file. Creation of such an index file allows for obtaining index information on each record via a single I/O upon request of a search, whereby it becomes possible to eliminate the need for file I/O access to each record or the like. As a result, it becomes also possible to reduce the response time in execution of a search for a file as well as the load on the file server.

### SUMMARY OF THE INVENTION

The technique disclosed in Reference 1 is a technique of creating an index file for each record of a single CSV file. When such a technique is applied to the technique of creating an index file for multiple files, the following problems will arise.

That is, many computers adopt a file system in which a hierarchical structure can be established with one or more folders (such folders may also be referred to as "directories" depending on file systems but shall be hereinafter referred to as "folders") and any one of the folders contains files. In addition, a user (hereinafter also referred to as an "operator") of the computer who is authorized to read (i.e., refer to) each folder and file is determined.

Thus, when small-size information (index information) on multiple files to be used for searches such as storage locations and keywords is created as an index file and a search is conducted with reference to the index file, a file that a user conducting a search is not authorized to read would also be displayed as a search result. In such a case, if the user attempts to read the content of the file, the file system determines that the user is not authorized to read the file and thus prohibits the file from being read by the user. However, even if such a user cannot read the content of the file, the presence of the file that the user is not authorized to read as well as the storage location thereof becomes known to the user, which is not desirable for security reasons.

It seems that the aforementioned problems can be addressed by storing information about which user is authorized to access (e.g., read) each file (folder) (hereinafter also referred to as a "file (folder) access right" or "file (folder) read right" with regard to the right to read each file (folder), for example) as part of index information.

However, as described previously, many computers adopt a file system in which a hierarchical structure can be established with one or more folders and any one of the folders contains files, and a user of the computer who is authorized to access each folder and file is determined. Thus, there may be cases in which a folder named "etc" contains a file named "file1," and a "user1" among users is permitted to read the "file1" but is not permitted to read the folder "etc.," for example. If the right of access to the "file1" is merely stored as part of index information, the "user1" would be determined to be authorized to read the "file1" in execution of a search, and thus the "file1" would be displayed as a search result. That is, even if a user is authorized to access a given file but is not authorized to access a folder that is at a higher hierarchical level than the file, the user would be able to directly access the file as long as such a file is presented as a search result although he/she would not be able to access the file through the folder. In such a case, it is desirable that the user should not be able to access the file for security purposes even if he/she is authorized to access the file because he/she is not originally authorized to access the folder that is at a higher hierarchical level than the file.

The present invention has been made in view of the foregoing, and provides a mechanism that, when presenting a search result to a user while reducing the load on a file server, sets a file to be accessible to the user only when the user is authorized to access the file and folders of all hierarchical levels.

In order to solve the aforementioned problems, the present invention employs a search method that includes, under the condition of using a file system having a folder hierarchical structure where the right of access to each folder and file is set, creating an index file for files to be searched for in advance, and searching for a file specified as a search target with reference to the index file. In such a method, an appropriate right of access to each file and folder is set in creation of the index file, whereby it becomes possible to display as search results only the files that the relevant user is authorized to read.

That is, the present invention relates to a file search system in which a file search server executes a search in response to a search request and presents a search result to a client device, and the client device obtains a desired file from a file server. The file server herein comprises a search-target-file storage having stored therein multiple search target files. The file search server comprises an index file storage having stored therein an index file for the multiple search target files, and search means that executes a search of the index file in accordance with the search request. The index file includes file access right information that is created by taking into consideration the right of access to each of the search target files as well as the rights of access to folders related to the file. The file search server presents the search result only to a client device operated by a user who is authorized to access the file. More specifically, the file access right information includes information that identifies if each of users is authorized to access each of the search target files as well as all of the folders related to the file. Alternatively, the file access right information includes first information indicating conditions of a user who is authorized to access each of the search target files as well as all of the folders related to the file, and second information indicating conditions of a user who is not authorized to access such a file or folders. In addition, AND operation of the first information and the second information provides a user who is authorized to access the file.

The file search server further comprises index creation means that creates the index file. In this case, the index creation means creates the index file with reference to a system file of the file server, the system file including a management table for managing users and the right of access to each folder and file. In addition, the index creation means updates the index file by referring to the search-target-file storage at given timings.

Further features of the present invention will become apparent from the following preferred embodiments and drawings for carrying out the present invention.

According to the present invention, a system that can present a search result to a user only when he/she is authorized to access the file and folders of all hierarchical levels can be provided while reducing the load on a file server. Thus, even when a file that matches the search criteria exists, a user will not be informed of even the presence of such a file unless he/she is authorized to access the file. Thus, a more secure system can be realized.

### BRIEF DESCRIPTION OF THE DRAWINGS

In the accompanying drawings:
FIG. 1 illustrates the schematic configuration of a file search system in accordance with the first embodiment of the present invention;
FIG. 2 illustrates an exemplary data structure of a system file in accordance with the first embodiment;
FIG. 3 illustrates an exemplary data structure of an index file in accordance with the first embodiment;
FIG. 4 is a flowchart illustrating the operation of index creation means in accordance with the first embodiment;
FIG. 5 is a flowchart illustrating the operation of search request means in accordance with the first embodiment;
FIG. 6 is a flowchart illustrating the operation of search means in accordance with the first embodiment;
FIG. 7 is a flowchart illustrating the keyword search processing of search means in accordance with the first embodiment;
FIG. 8 illustrates an example of a login screen in accordance with the first embodiment;
FIG. 9 illustrates an example of a search request screen in accordance with the first embodiment;
FIG. 10 illustrates an example of search results displayed on the search request screen in accordance with the first embodiment;
FIG. 11 illustrates an exemplary data structure of an index file in accordance with the second embodiment of the present invention; and
FIG. 12 illustrates the schematic configuration of a file search system in accordance with the third embodiment of the present invention.

### DESCRIPTION OF SYMBOLS

- 1: file server
- 11: file management means
- 2: storage device
- 21: system files
- 22: search target files
- 3: client
- 31: search request means
- 32: input device
- 33: display device
- 4: LAN
- 5: storage device
- 51: search history file
- 6: file search server
- 61: index creation means
- 62: search means
- 7: storage device
- 71: index file

### DETAILED DESCRIPTION OF THE PREFERRED EMBODIMENTS

Hereinafter, embodiments of the present invention will be described with reference to the accompanying drawings. It should be noted that the following embodiments are illustrative only for the purpose of implementing the present invention, and are not intended to limit the technical scope of the present invention. In addition, structures that are common to all of the drawings are denoted by common reference numerals.

In this embodiment, the term "file" refers to digital information of all kinds and forms stored in an information processing device except "folders." Examples of files include document files, table files, electronic mail, databases, and each record or program stored in databases. In addition, the term "folder" refers to digital information having a hierarchical structure for managing files or other folders, and is also referred to as a "directory" depending on file systems.

The term "user" or "operator" refers to a person who uses or operates each computer. In the following description, a "user" who actually operates a computer will be generally referred to as an "operator." However, there is no terminological difference between the two terms.

Further, the term "file (folder) access right" refers to information about which user is authorized to read, write data to, or execute each file (folder). With regard to the read right, for example, which is part of the access right, the term "file (folder) read right" is used. In addition, a user who is permitted to access (e.g., read) a given file or folder will be referred to as a "user authorized to access the file or folder."

### (1) The First Embodiment

### <Configuration of File Search System>

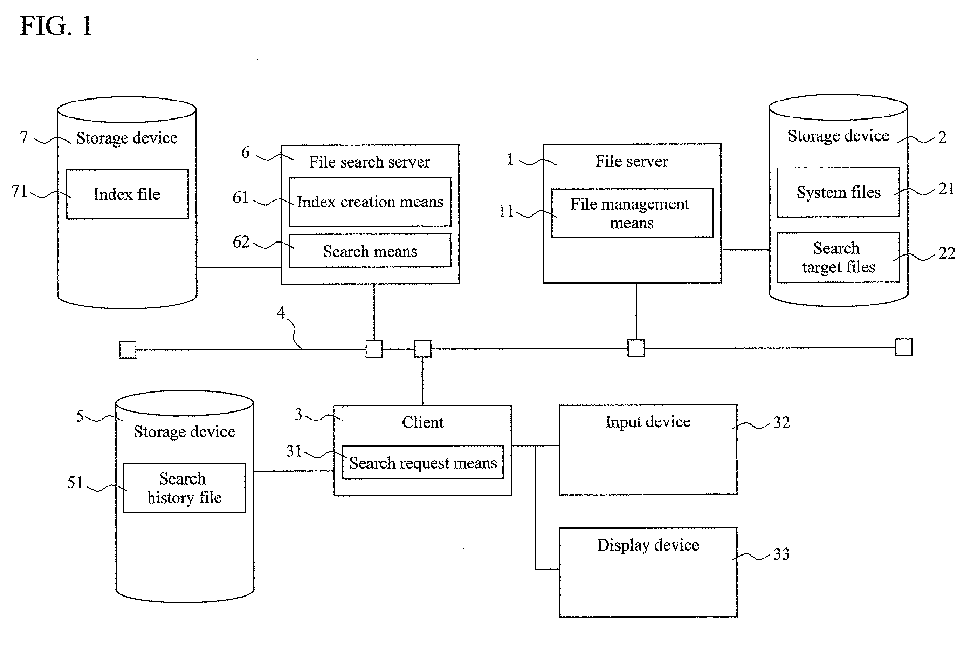

FIG. 1 illustrates the schematic configuration of a file search system in accordance with the first embodiment of the present invention.

The file search system includes a client 3, a file search server 6, and a file server 1 that are connected to one another in a mutually communicable manner via a wired or wireless communications line such as a LAN (Local Area Network) 4. Although the number of each of the clients 3, the file search servers 6, and the file servers 1 illustrated herein is only one, it may be more than one.

In addition, although the client 3, the file search server 6, and the file server 1 in FIG. 1 are connected to one another in a mutually communicable manner via the LAN 4, the connection method is not limited to LAN. For example, each of the client and servers may be connected via a WAN (Wide Area Network) or the Internet.

With the aforementioned configuration, the client 3 can send a file search request (hereinafter abbreviated as a "search request") to the file search server 6, which in turn can execute a search by, for example, reading the contents of files stored in the file server 1 as appropriate and can send a file search result (hereinafter abbreviated as a "search result") to the client 3.

The client 3 is a device such as a PC, and is connected to an input device 32, a display device 33, and a storage device 5 in a mutually communicable manner. The input device 32 is a device such as a keyboard or mouse. The operator of the client 3 can specify the processing to be executed by the client 3 by operating the input device 31, That is, the input device 32 functions as input means of the client 3.

The display device (an output device) 33 is a device such as a liquid crystal display or printer, and displays or prints out the processing results of the client 3 and the like. That is, the display device 33 functions as display means and output means of the client 3. The storage device 5 is a device such as a magnetic disk and is incorporated in the client 3 or is externally connected thereto. The storage device 5, primary storage (not shown) of the client 3, and the like function as storage means of the client 3.

The client 3 includes a CPU (Central Processing Unit), primary storage, and the like (not shown). The CPU, though not shown in FIG. 1, executes various kinds of processing such as, for example, loading the search request program or the like stored in the storage device 5 onto the primary storage and executing its instruction code. Such processing related to the execution of programs is a well-known technique. In the following description and drawings, various programs are described in such a way as if hardware exists and each means is described as executing given processing (e.g., a "search request program" is described as "search request means") in order to avoid complicated description of the execution of the program. It should be noted that in practice, each means (e.g., search request means 31) can be an electronic device or a combination of an electronic device and firmware.

The search request means 31 is a search request program as described above. The search request means 31, in response to file search criteria as well as a file search instruction entered through the input device 32 by the operator of the client 3 (for example, an instruction requesting a search for a file named "accounting file"), creates a search criteria formula, and sends a search request including the search criteria formula to the file search server 6. In addition, the search request means 31 receives a search result that has been sent to the client 3 from the file search server 6, and displays the search result on the display device 33.

The file server 1 includes a device such as a PC, and is connected to a storage device 2 in a mutually communicable manner. The storage device 2 is a device such as a magnetic disc and is incorporated in the file server 1 or is externally connected thereto. The storage device 2, primary storage (not shown) of the file server 1, and the like function as storage means of the file server 1.

The storage device 2 has stored therein system files 21 and files 22 to be searched for (hereinafter referred to as "search target files 22"). The search target files 22 herein do not refer to specific files stored in the storage device 2 but refer to a collection of files each of which can be a search target. Accordingly, the search target files 22 can be all of the files stored in the storage device 2 or all files except highly confidential files such as the system files.

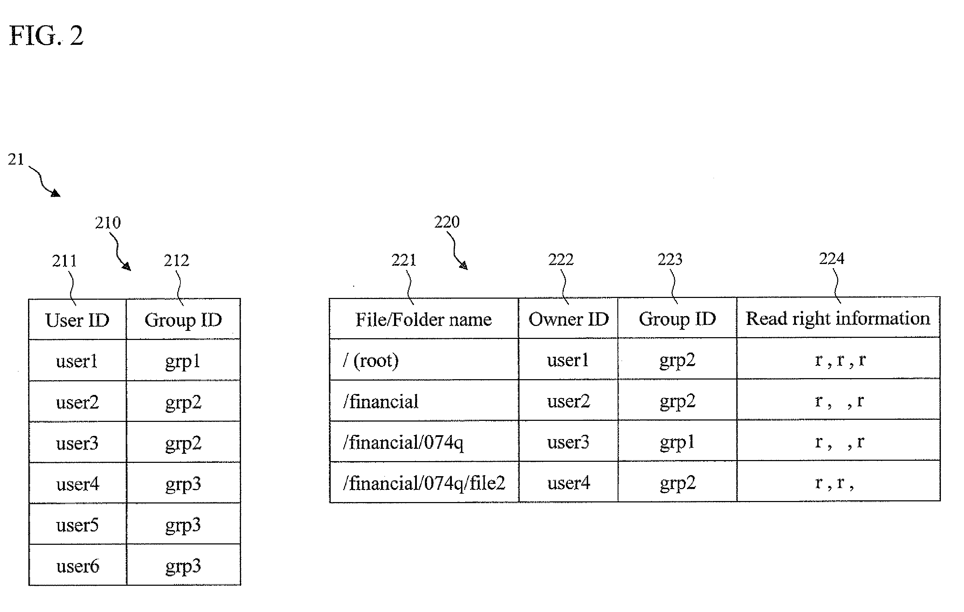

The system files 21 represent the generic term for files that are mainly used for the management of the computer with an OS (Operating System, not shown) of the file server 1. Examples of the system files 21 include a number of files such as a file that manages the execution status of each process in the file server 1, a file that manages the user of the file server 1, and a file that manages each folder access right or file access right. Among such system files 21, files that are directly related to the first embodiment are described below (see FIG. 2). It should be noted that although similar files reside in the storage device 5 of the client 3 as well as a storage device 7 of the file search server 6, description of such files will be omitted because it would not be necessary for the description of the present invention.

The file server 1 includes, as with the client 3, file management means (a file management program) 11 as well as a CPU, primary storage, and the like (not shown). The CPU, though not shown, executes various kinds of processing such as, for example, loading the file management program or the like stored in the storage device 2 onto the primary storage and executing its instruction code. In the following description and drawings, various programs are described in such a way as if hardware exists and each means is described as executing given processing (e.g., a "file management program" is described as "file management means 11") in order to avoid complicated description of the execution of the program. It should be noted that in practice, each means (e.g., the file management means 11) can be an electronic device or a combination of an electronic device and firmware.

The file management means 11 has a function of performing I/O to files stored in the storage device 2 and is often implemented as part of the OS.

The file search server 6 is a device such as a PC, and is connected to the storage device 7 in a mutually communicable manner. The storage device 7 is a device such as a magnetic disc and is incorporated in the file search server 6 or is externally connected thereto. The storage device 7, primary storage (not shown) of the file search server 6, and the like function as storage means of the file search server 6.

The storage device 7 has stored therein an index file 71. The index file 71 is a file having stored therein relatively small-size information (index information) to be used in a search for files that are managed in the storage device 2 by the file server 1. The content stored in the index file and the like are described below in conjunction with the function of the file search server 6.

The file search server 6 includes index creation means (an index creation program) 61 and search means (a search program) 62.

The file search server 6 includes, as with the client 3, a CPU, primary storage, and the like (not shown). The CPU, though not shown, executes various kinds of processing such as, for example, loading the index creation program or the like stored in the storage device 7 onto the primary storage and executing its instruction code. In the following description and drawings, various programs are described in such a way as if hardware exists and each means is described as executing given processing (e.g., an "index creation program" is described as "index creation means 61") in order to avoid complicated description of the execution of the program. It should be noted that in practice, each means (e.g., the index creation means 61) can be an electronic device or a combination of an electronic device and firmware.

The index creation means 61 creates the index file 71 by referring to the search target files 22 at given timings, for example, every day at the same time. As described above, the search target files 22 are the files that should be searched for upon reception by the file search server 6 a search request from the client 3. For example, the search target files 22 can be all of the files stored in the storage device 2 or part of the files stored in the storage device 2 (e.g., all files in a specific folder).

In either case, when a search is executed with reference to the search target files 22 each time a search request is received, a large number of file I/Os would be generated.

Thus, in order to reduce the time required for searches and to prevent an increase in the load on the file search server 6 and the file server 1, relatively small-size information (hereinafter referred to as "index information") such as file names or creators of the search target files 22, which may be used as search criteria with high probability, is stored in the index file 71.

For example, when multiple pieces of index information are collectively stored in a single file, such multiple pieces of index information can be read with a single I/O. The file search server 6, upon receiving a search request from the client 3, refers to the index information first, so that it can determine if any files that match the search criteria formula of the search request exist.

It should be noted that as described above, when a search is executed with reference to the index information, if the search target files 22 have been deleted or changed after the creation of the index information (for example, if a file named "accounting file" has been deleted after the creation of the index information), a search result that differs from the case in which the actual search target files 22 are searched for would be obtained (although the "accounting file" appears to exist when the index information is referred to, such a file does not actually exist among the search target files 22).

Thus, as described above, the index creation means 61 can be configured to execute the processing at given timings, for example, every day at the same time. Accordingly, the index file 71 can be periodically updated and a big discrepancy between the index file 71 and the search target files 22 can be avoided.

In addition, if the interval of the processing timing of the index creation means 61 is shortened (for example, if the processing is executed once every hour), the discrepancy between the index file 71 and the search target files 22 can be further reduced. It should be noted, however, that when the interval of the processing timing of the index creation means 61 is shortened, intervals of I/Os generated for all of the files included in the search target files 22 becomes also short. Thus, the interval of the processing timing of the index creation means 61 should be determined taking into consideration the performance of the file search server 6 and the file server 1. That is, the update interval should be determined so that the load on the file server 1 does not become excessive.

For example, a method would be effective that includes running a program that constantly monitors the CPU utilization, I/O frequency per given time, or the like on the file server 1 and executing the index creation means 61 only when the CPU utilization, I/O frequency per given time, or the like becomes equal to or lower than a given value.

Alternatively, it is also possible to run a program that constantly monitors the file I/Os of the search target files 22 so as to update index information on the search target files 22 within the index file 71 each time the search target files 22 are updated. As a further alternative, it is also possible to record, after the creation of the index file 71, information on updated files among the search target files 22, and update index information only on the updated files among the search target files 22 within the index file 71. Accordingly, once the index file 71 for all of the search target files 22 is created, it will be only necessary to update a portion of the index file 71 corresponding to the updated files. Thus, reduction in the load on the file search server 6 and the file server 1 can be achieved.

### <Exemplary Structure of System File>

FIG. 2 illustrates an exemplary data structure of a file extracted from the system files 21 of the first embodiment that is directly necessary for the description of the present invention. Specifically, FIG. 2 includes a file 210 for managing users (hereinafter referred to as a "user management table 210") and a file 220 for managing files and folders (hereinafter referred to as a "file management table 220").

The user management table 210 has stored therein one-to-one correspondence between a user ID 211 that identifies each user and a group ID 212 that identifies a user group to which the user belongs. In the example of FIG. 2, a "user1" belongs to a "grp1," a "user2" and "user3" belong to a "grp2," and a "user4," "user5," and "user6" belong to a "grp3."

It should be noted that the user management table 210 of FIG. 2 only illustrates the method of associating the user ID 211 with the group ID 212. In actual computer systems, the user ID 211 and the group ID 212 are not necessarily stored in a one-to-one correspondence relationship within a single table as illustrated in FIG. 2. For example, it is also possible to store the user ID 211 and the group ID 212 on separate tables and associate the user ID 211 with the group ID 212 using link information. Further, it is typically possible to associate a single user ID 211 with two or more different groups IDs 212. Techniques described below can even be applied to such cases with ease. Regardless of what kind of structure is employed, it is possible to know, as long as the user ID of a user is known, the group ID of a user group to which the user belongs and also know, as long as the group ID is known, the user IDs of all users belonging to the user group.

The file management table 220 has stored therein a file/folder name 221 representing the name of a file or folder, an owner ID 222 representing the user ID of the owner of the relevant file or folder (i.e., a user who can set and update the right of access to the relevant file or folder), a group ID 223 representing the group ID of a user group that has a possibility of having the right of access to the relevant file or folder, and read right information 224 representing the rights of the owner ID 222, the group ID 223, and other users to read the relevant file or folder, which are associated with one another.

For example, in the example of FIG. 2, the owner and user group of a folder named "/" (root) are the "user1" and "grp1," respectively. Referring to the characters "r,r,r" of the read right information 224, the left "r" indicates that the "user1" who is the owner is authorized to read the folder, the middle "r" indicates that users belonging to the "grp2" that is the user group (i.e., the "user2" and "user3" in the example of FIG. 2) are authorized to read the folder, and the right "r" indicates that users who are not the owner or do not belong to the user group (i.e., the "user4," "user5," and "user6" in the example of FIG. 2) are authorized to read the folder. Eventually, users who are authorized to read the folder "/" (root) are the "user1," "user2," "user3" "user4," "user5," and "user6."

In addition, the owner and user group of a folder named "/financial" are the "user2" and "grp2," respectively. Referring to the characters "r , , r" of the read right information 224, the left "r" indicates that the "user2" who is the owner is authorized to read the folder, the middle " " (space) indicates that users belonging to the "grp2" that is the user group (i.e., the "user2" and "user3" in the example of FIG. 2) but excluding the owner (i.e., the "user3" in the example of FIG. 2) are not authorized to read the folder, and the right "r" indicates that users who are not the owner or do not belong to the user group (i.e., the "user1," "user4," "user5," and "user6" in the example of FIG. 2) are authorized to read the folder. Eventually, users who are authorized to read the folder "/financial" are the "user1," "user2," "user4," "user5," and "user6."

Further, the owner and user group of a folder named "/financial/074q" are the "user3" and "grp1," respectively. Referring to the characters "r , , r" of the read right information 224, the left "r" indicates that the "user3" who is the owner is authorized to read the folder, the middle " " (space) indicates that users belonging to the "grp1" that is the user group (i.e., the "user1" in the example of FIG. 2) are not authorized to read the folder, and the right "r" indicates that users who are not the owner or do not belong to the user group (i.e., the "user2," "user4," "user5," and "user6" in the example of FIG. 2) are authorized to read the folder. Eventually, users who are authorized to read the folder "/financial/074q" are the "user2," "user4," "user5," and "user6."

Similarly, the owner and user group of a file named "/financial/074q/file2" are the "user4" and "grp2," respectively. Referring to the characters "r , r , " of the read right information 224, the left "r" indicates that the "user4" who is the owner is authorized to read the file, the middle "r" indicates that users belonging to the "grp2" that is the user group (i.e., the "user2" and "user3" in the example of FIG. 2) are authorized to read the file, and the right " " (space) indicates that users who are not the owner or do not belong to the user group (i.e., the "user1," "user5," and "user6" in the example of FIG. 2) are not authorized to read the file.

Herein, users who are actually permitted to read the file "/financial/074q/file2" are limited to users who are permitted to read all of the upper folders ("/," "/financial," and "/financial/074q"). Thus, users who are actually permitted to or authorized to read the file "/financial/074q/file2" are the "user2" and "user4" that are common to all of the following groups: ("user1," "user2," "user3," "user4," "user5," and "user6"), ("user1," "user2," "user4," "user5," and "user6"), ("user2," "user3," "user4," "user5," and "user6"), and ("user2," "user3," and "user4").

In the conventional methods, since users (the "user2," "user3," and "user4") are authorized to read the file "/financial/074q/file," search results are presented to such users. However, notwithstanding the fact that the "user3" is not authorized to read the folder "/financial," the search results are presented to the "user 3" with the conventional methods. In contrast, in the present invention, the right to read a specific file is determined taking into consideration the rights to read (access) all of the upper folders related to such a file. Thus, in the example illustrated herein, the user3 cannot access the file "/financial/074q/file2." Accordingly, search results can be presented to users more securely.

It should be noted that the file management table 220 of FIG. 2 only illustrates the method of setting the file read right or folder read right that is directly related to the present invention, as an example of the file access right or folder access right. In actual computer systems, for example, the folder access right is typically managed with three types of UNIX codes that are "r (read)" (which indicates that a list of files or folders in the relevant folder can be read), "w (write)" (which indicates that files and folders can be created or modified in the relevant folder), and "x (execute)" (which indicates that the contents of the files in the relevant folder can be executed). Likewise, the file access right is typically managed with three types of UNIX codes that are "r" (which indicates that the content of the file can be read), "w" (which indicates that the content of the file can be created or modified), and "x" (which indicates that the content of the file can be executed as a program). In such cases, the code x" for folders and the code "r" for files are considered as having the same meaning in that both the codes denote the rights to read the content of the relevant file. Thus, the technique of the present invention can be implemented by replacing the code x" for folders and the code "r" for files with the code "r" of the read right information 224. Further, as long as a user has the right "r" for a folder, he/she can read a list of files or folders within such a folder even though he/she cannot see the contents of the files. Thus, it can be considered that no security problems would arise even if the presence of such files becomes known to the user as a result of a search. Accordingly, it is also possible to implement the technique of the present invention by replacing the code "r" or "x" for folders and the code "r" for files with the "r" of the read right information 224.

Further, the file access right or folder access right needs not be stored in a table such as the file management table 220. For example, such right may be stored as part of the file attribute information on each file or folder.

Furthermore, although the file management table 220 of FIG. 2 illustrates four pieces of folders/files, such figure exclusively illustrates only the examples that are sufficient for the description of the present invention. Naturally, actual computer systems have an enormous number of folders and files set therein. <Exemplary Data Structure of Index File>

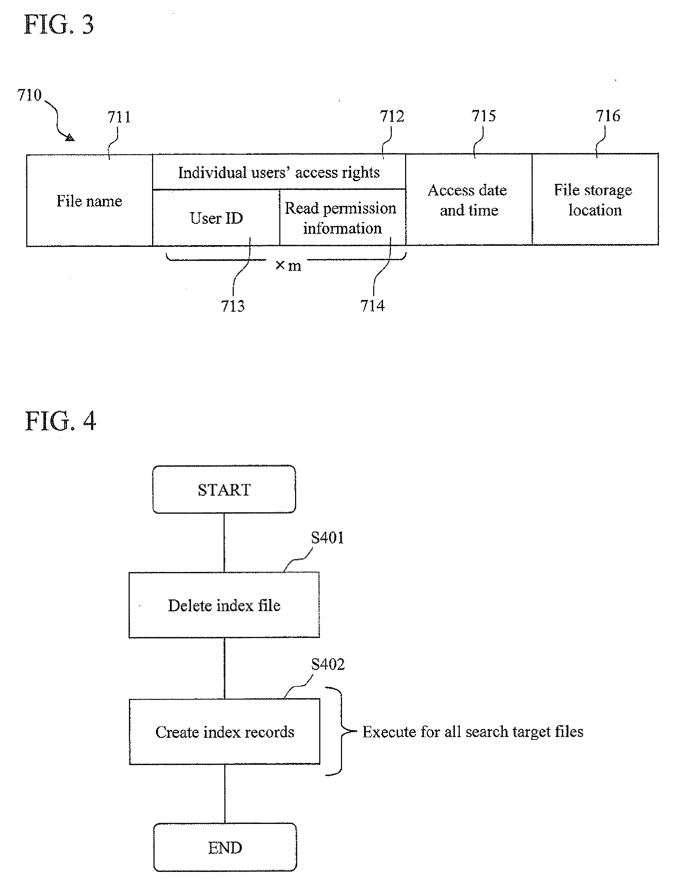

FIG. 3 illustrates an exemplary data structure of the index file 71 in accordance with the first embodiment.

The index file 71 includes an index record 710 corresponding to each file (hereinafter referred to as a "search file element" in the description of FIG. 3) included in the search target files 22. That is, each index record 710 has a one-to-one correspondence relationship with each search file element at the point of creation of the index file 71.

The index record 710 is composed of data items including a file name 711, a user ID 713, information 714 about whether read is permitted or not (hereinafter referred to as "read permission information 714" or also referred to as "read right information 714"), access date and time 715, and a file storage location 716. The user ID 713 and the read permission information 714 are collectively referred to as individual users' access rights 712. The individual users' access rights 712 are set in corresponding number to the number (*m*) of users set in the user management table 210 (six users in the example of FIG. 2).

The file name of the corresponding search file element is set as the file name 711. Specifically, it is possible to set a title name that is given by a creator of a file upon creation of the file, such title name being set as the attribute information (for example, the property of a Microsoft Office ("Microsoft" is the registered trademark) file) on the file.

In the individual users' access rights 712, one or more rights of individual users to access the corresponding search file element is/are set. As described below, the individual users' access rights 712 can be set with reference to the access rights in the file management table 220 set by the file management means 11 of the file server 1. In the present invention, as described above, when a given user is authorized to access a given file as well as all of the upper folders related to the file, such a user is permitted to access the file.

A user ID that identifies a user of the file server 1 is set as the user ID 713. The read right of the relevant user is set as the read permission information 714. For example, when the user ID 713 and the read permission information 714 are represented as (user ID 713, read permission information 714), if the following are set: ("user1," " " (space)), ("user2," " " (space)), ("user3," " " (space)), ("user4," " " (space), ("user5," "r"), and ("user6," "r"), it follows that the "user5" and "user6" are authorized to read the relevant search file element whereas the "user1," "user2," "user3," and "user4" are not authorized to read. In the access date and time 715, the last date and time at which the relevant search file element was accessed by a given user are set. Specifically, it is possible to set the last access date and time that are set as the attribute information on a file and are updated each time the file management means 11 of the file server 1 accesses the file.

In addition to the aforementioned information, other file attribute information such as a file creator name can also be set as the data item of the index record 710.

The storage location of the corresponding search file element is stored as the file storage location 716. For example, the absolute path of a file such as "/financial/074q/file2" (a "file2" in the folder "074q" in the folder "financial" that immediately follows the root), or a relative path determined in relation to a specific folder can be stored. Alternatively, given information that can identify the storage location of the relevant file can be stored.

The index record 710 having set therein the aforementioned data is created, updated, or deleted by the index creation means 61 and is referred to by the search means 62 as described below. <Index Creation Processing>

FIG. 4 is a flowchart illustrating the operation of the index creation means 61 in accordance with the first embodiment.

The index creation means 61, when activated at a given timing, deletes the index file 71 as described above (S401).

Next, the index creation means 61 executes the process of creating the index records 710 of all of the files included in the search target files 22 (S402). For example, when all of the files stored in a specific folder in the storage device 2 are the search target files 22, the index creation means 61 sequentially refers to the files in the folder, and creates the index record 710 of each file. That is, the index creation means 61, with reference to the attribute information on each file and the like, sets the file name 711, the individual users' access rights 712, and the access date and time 715, and also sets the storage location of the relevant search target file 22 as the file storage location 716.

Then, the index creation means 61 stores the index records 710 in the storage device 2 (S402). The method of setting each data is as described above with reference to FIG. 3. The method of setting the individual users' access rights 712 is described below.

Upon termination of the process of creating the index records 710 of all of the files included in the search target files 22 (S402), the index creation means 61 terminates the process.

The aforementioned description is based on the premise that each time the index creation means 61 executes the processing, the index file 71 for all of the files included in the search target files 22 at the point of execution of the processing is recreated. However, as described above, it is also possible to create the index file 71 for all of the files included in the search target files 22 only once and thereafter update a portion of the index file 71 corresponding to only the updated files.

In addition, files included in the search target files 22 can be read in any order. Thus, no particular relationship exists between the order of the index records 710 and the order of the absolute paths of the files.

### <Setting of the Individual Users' Access Rights>

The method of setting the individual users' access rights 712 will be described hereinafter.

The read right information 224 in the file management table 220 can have only eight types of setting as follows: "-, - ,-," " "-, -, r," "-, r, -," "-, r, r," "r, -, -," "r, -, r," "r, r, -," and "r r, r." It should be noted that "-" in such setting represents a space, that is, no one is authorized to read a given folder or file.

In each of the eight types of setting, provided that the owner and user group of the relevant folder or file are represented as "the_user" and "the_group," respectively, and all of the users set in the user management table 210 are collectively represented as "all_users," the following users are authorized to read the relevant folder or file.
i) Users authorized to read when the read right information 224 is "- , - ,- ": None.
ii) Users authorized to read when the read right information 224 is "- , - , r ":
   "all_users" except "the_user" and users belonging to the "the_group."
iii) Users authorized to read when the read right information 224 is "- , r , - ": all users belonging to "the_group" except "the_user."
iv) Users authorized to read when the read right information 224 is "-, r , r ":
   "all_users" except "the_user."
v) Users authorized to read when the read right information 224 is "r , - , - ": "the_user."
vi) Users authorized to read when the read right information 224 is "r ,- , r ":
   "the_user" and "all_users" except users belonging to "the_group."
vii) Users authorized to read when the read right information 224 is "r , r , - ":
   "the_user" and users belonging to "the_group."
viii) Users authorized to read when the read right information 224 is "r , r , r ": "all_users."

The actual user IDs of the "all_users" can be known by referring to the user management table 210 (in the example of FIG. 2, the "user1," "user2," "user3," "user4," "user5," and "user6"). In any of the aforementioned cases, the user ID of "the_user" as well as users belonging to "the_group" can be known by referring to the file management table 220 and the user management table 210. Thus, it is possible to know which user ID 211 is specifically authorized to read a given file or folder. Further, by excluding the user IDs 211 that are authorized to read a given file or folder from "all_users," it is also possible to know the user IDs 211 that are not authorized to read such a file or folder.

Based on the aforementioned premise, a method of setting the individual users' access rights 712 for "the_file" having an absolute path of, for example, "/folder1/folder2/··· /folderN/the_file" will be described.

First, users who are authorized to read the uppermost folder "/" (root) are determined by the aforementioned method. Next, users who are authorized to read the "folder1" that immediately follows the folder "/" (root) are determined by the same method. Among such users, only those who are authorized to read the folder "/" (root) are determined to be the users who are authorized to read the "folder1."

Next, users who are authorized to read the "folder2" that immediately follows the "folder1" are determined by the same method. Among such users, only those who are authorized to read the "folder1" are determined to be the users who are authorized to read the "folder2." In this way, users who are authorized to read the lower folders are sequentially determined.

Finally, users who are authorized to read "the_file" that immediately follows the "folderN" are determined by the same method. Among such users, only those who are authorized to read the "folderN" are determined to be the users who are authorized to read "the_file." Then, the user (user ID) who is authorized to read "the_file" is set as the user ID 713 and "r" is set as the read permission information corresponding to the user ID 713. In addition, users among "all_users" except those who are authorized to read "the_file" are set as other user IDs 713, and " " (space) is set as the read permission information corresponding to such user IDs 713.

With the aforementioned method, the individual users' access rights 712 can be appropriately determined.

In this manner, by storing information that identifies users who are authorized to read a given file or folder as well as information that identifies users who are not authorized to read such a file or folder, it becomes possible to determine if the user of the client 3 is authorized to read the file or folder with a simple method that includes searching for a character string with reference to the information that identifies the user upon execution of a search as described below.

### <Operation of Search Request Means>

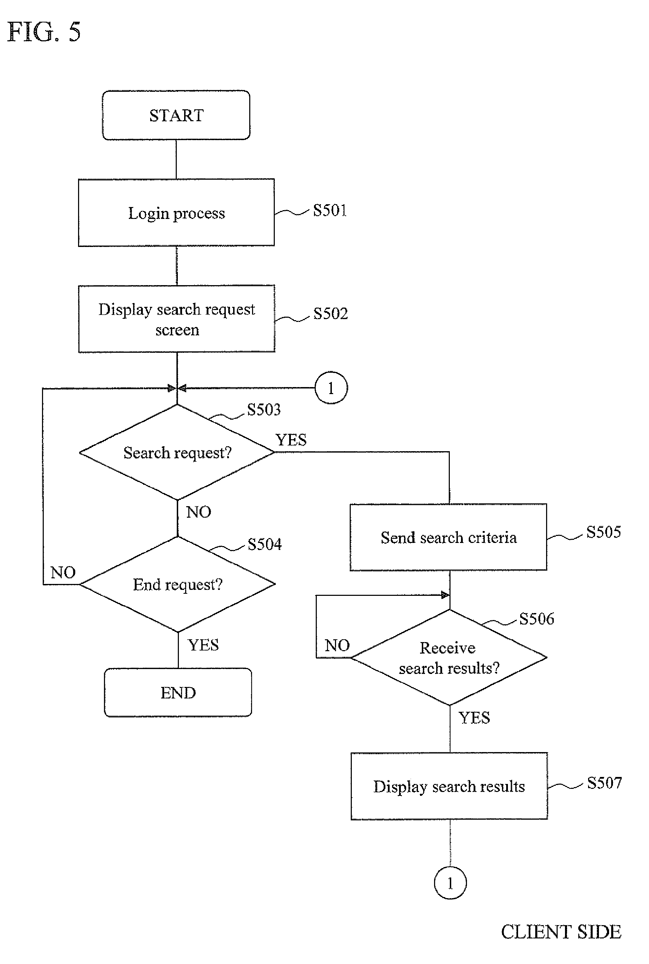

FIG. 5 is a flowchart illustrating the operation of the search request means 31 of the client device in accordance with the first embodiment.

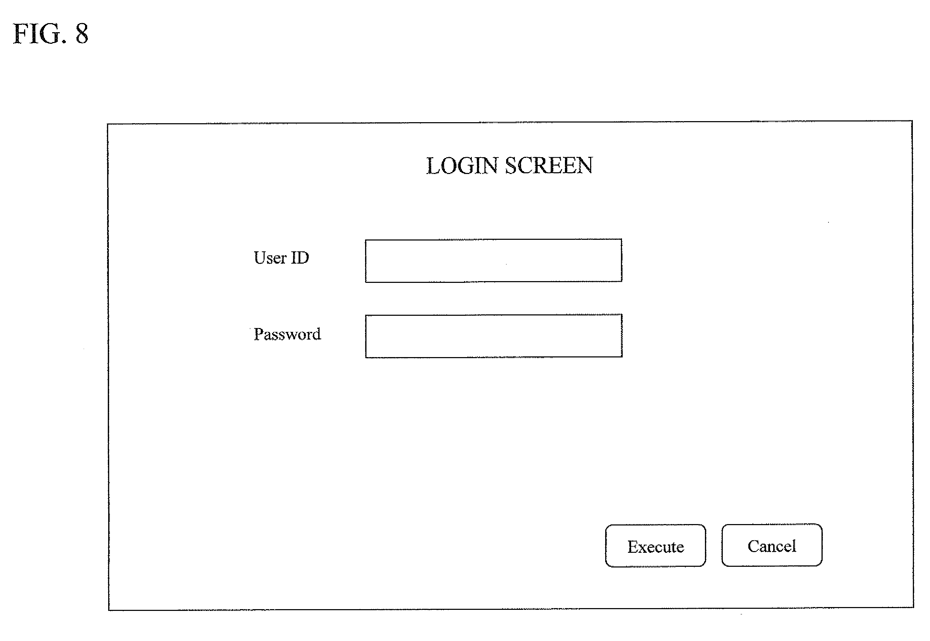

The search request means 31 is activated by an operator of the client 3 using the input device 32. The search request means 31, when activated, performs a login process (S501). Specifically, the search request means 31 displays a login screen on the display device 33 as illustrated in FIG. 8. The operator of the client 3 enters a user ID and password using the input device 32 and presses the "EXECUTE" button, whereupon it is determined if the entered user ID and password are valid. It should be noted that since such a login process is a well-known technique, further description thereof will be omitted.

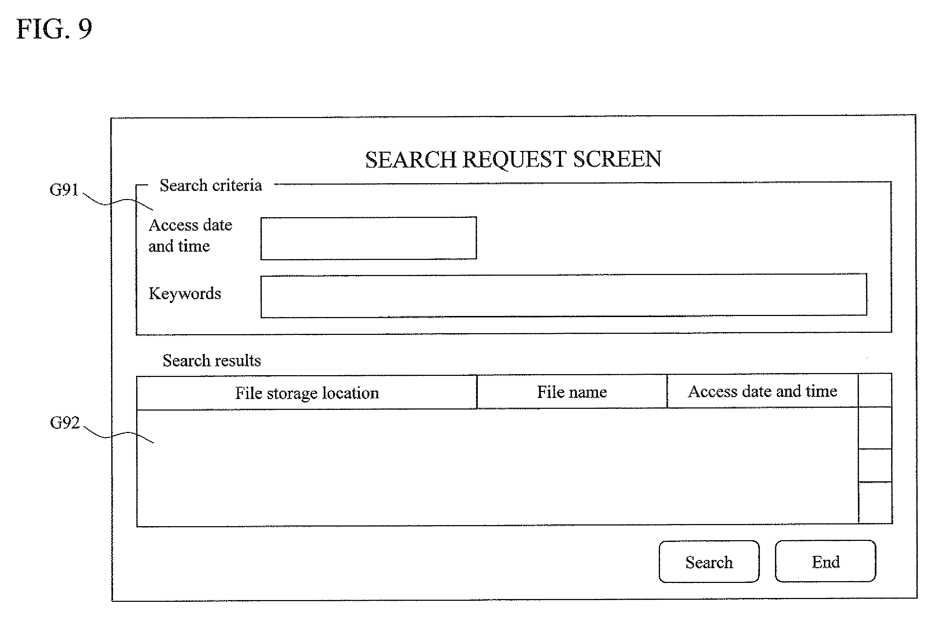

Next, if the search request means 31 determines that the entered user ID and password are valid, it displays a search request screen on the display device 33 (S502). FIG. 9 illustrates an exemplary display of such a search request screen. In FIG. 9, the search request screen includes a search criteria section G91, a search result section G92, and "SEARCH" and "END" buttons. The operator of the client 3 enters each item of the search criteria section G91 using the input device 32. The items entered into the search criteria section G91 will be the search criteria. For example, when ">10.12.2007 12:00:00" is entered as the access date and time, the file search server 6 will search for files that were accessed after October 12, 2007, 12:00:00. It should be noted that the items entered into the search criteria section G91 are not limited to those illustrated in FIG. 9. For example, such items may be determined in conformity with the data items of the index file 71 such as a file name. Further, any items that can be compared with the attribute information on the search target files 22 or the contents stored in the search target files 22 can be used even if such items are not included in the data items of the index file 71.

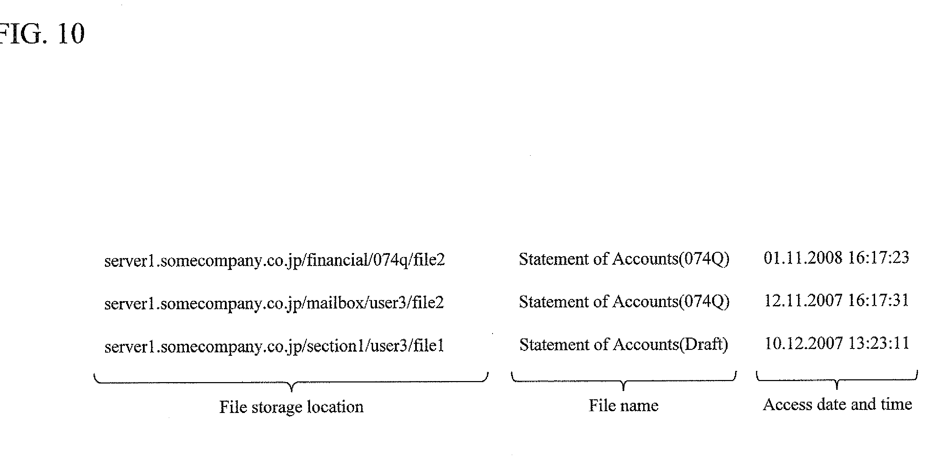

Search results obtained by the file search server 6 are scroll-displayed in the search result section G92. In the search result section G92, information illustrated in FIG. 10 is displayed, for example (S507). That is, the following three files:
"server1.somecompany.cojp/financial/074q/file2,"
"server1.somecompany.co.jp/mailbox/user3/file2," and
"serverl.somecompany.co.jp/sectionl/user3/filel" are the files (examples) that match the search criteria formula.

In addition to the information illustrated in FIG. 10, given data items included in the search results (for example, the individual users' access rights 712) that have been edited or not edited can be displayed in the search result section G92. After displaying the search request screen (S502), the search request means 31 waits for the "SEARCH" button or "END" button to be pressed (S503 and S504). If the "SEARCH" button is pressed, that is, if a search request is detected (if the answer to S503 is YES), the search request means 31 executes the search request processing (S505, S506, and S507). If the "END" button is pressed, that is, if an end request is detected (if the answer to S504 is YES), the search request means 31 terminates the process.

If the search request means 31 detects a search request (if the answer to S503 is YES), it creates search criteria with reference to the information entered into the search criteria section G91, and sends it to the search means 62 (S505). For example, if ">10.12.2007 12:00:00" is entered as the access date and time, the search request means 31 creates a search criteria formula such as "Search * (accesstime>10.12.2007 12:00:00)," and sends it together with the user ID entered into the login screen to the search means 62. The search criteria formula herein is a formula that is analyzed by the search means 62, and thus, it can be created in accordance with the syntax rule that is analyzable by the search means 62.

The search request means 31, after sending the search criteria formula to the search means 62, waits for a search result to be returned from the search means 62 (S506). Upon receiving the search result, the search request means 31 displays it in the search result section G92 of the search request screen (S507) and again waits for the "SEARCH" button or "END" button to be pressed (S503 and S504).

### <Search Processing>

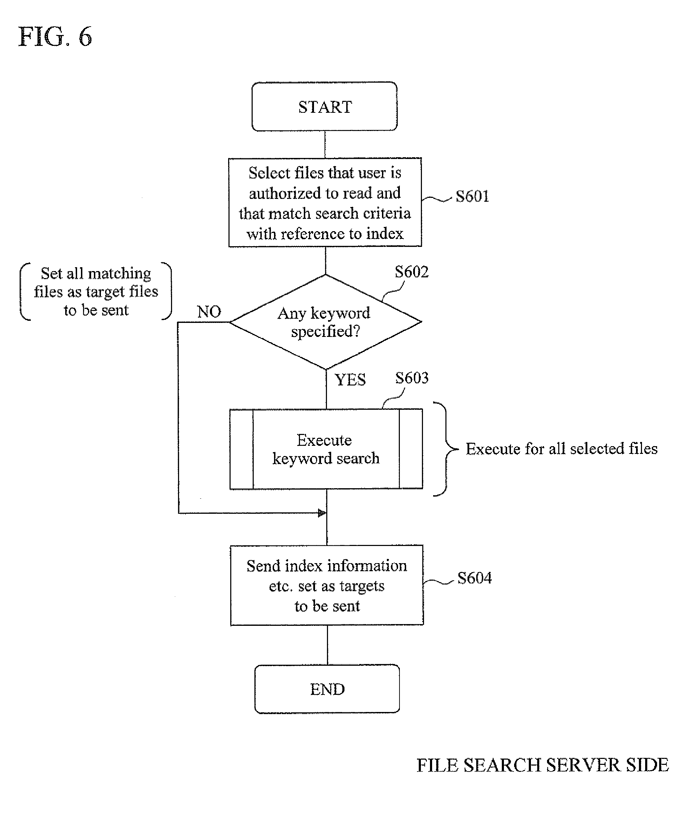

FIG. 6 is a flowchart illustrating the operation of the search means 62 of the file search server 6 in accordance with the first embodiment.

The file search server 6, upon receiving a search request from the client 3, activates the search means 62. The search means 62 first refers to all of the index records 710 and selects files (the index records 710) that the operator of the client 3 is authorized to read and that match the search criteria included in the search request (S601). Specifically, the search means 62 compares the user ID included in the search request received from the client 3 (i.e., the user ID entered into the login screen) with the user ID 713 of each index record 710 having the read permission information 714 indicative of "r", and determines the files (the index records 710) whose user ID 713 matches the user ID included in the search request to be the files that the operator of the client 3 is authorized to read. Meanwhile, in order to select files (the index records 710) that match the search criteria included in the search request, if "Search * ((accesstime>10.12.2007 12;00:00)&(keyword="2007"))" is specified as a search criteria (formula), for example, the search means 62 selects all of the index records 710 whose access date and time 715 are later than October 12, 2007, 12:00:00.

Next, the search means 62 determines if the search criteria (formula) contains any keyword specified (S602). If any keyword is contained (for example, if a condition such as "keyword="2007"" is specified as can be seen in the aforementioned search formula), the search means 62 searches for all of the files selected in S601 by the keyword (S603) so that files (the index records 710) that should be sent as search results are determined.

Meanwhile, if "Search * (accesstime>10.12.2007 12:00:00)" is specified as the search criteria (formula), for example, keyword searches are not conducted because such search criteria formula contains no keyword specified. Instead, all of the files (the index records 710) selected in S601 are set as the target files to be sent (if the answer to S602 is NO).

The search means 62, after determining the files (the index records 710) to be sent with the aforementioned processing, sends the data items (the file name 711, the individual users' access rights 712, the access date and time 715, and the file storage location 716) of all of the index records 710 of the files, which have been set as the target files to be sent, as the search results to the client 3 (S604), and terminates the process.

### <Keyword Search Processing>

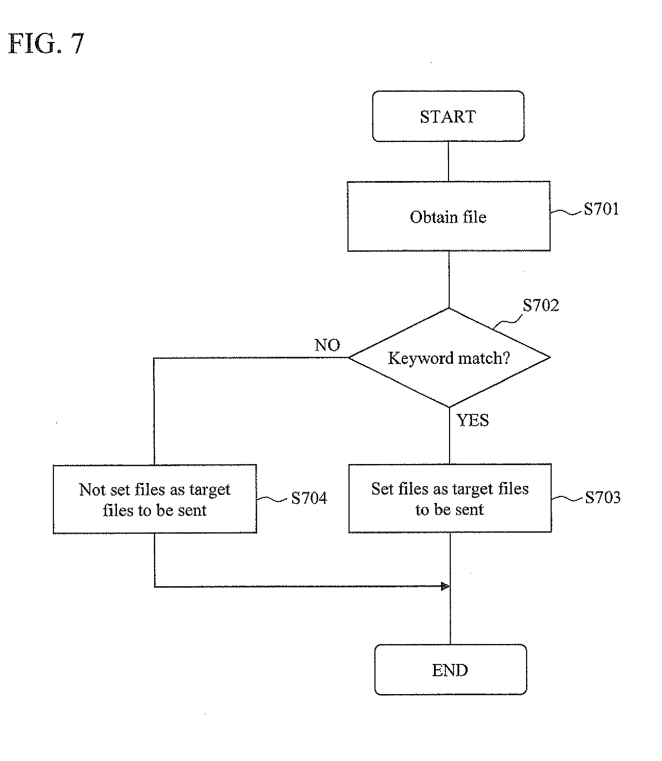

FIG. 7 is a flowchart illustrating the keyword search processing (603) executed by the search means 62 of the file search server 6 in accordance with the first embodiment.

The search means 62 obtains the files selected in the processing of S601 (referred to as "selected files" in the description of FIG. 7 and thereafter) with reference to the file storage location 716 (S701), and determines if such files match the keyword conditions of the search criteria formula (S702). The method of determination of a keyword match is a well-known technique. Thus, no detailed description thereof is given below. When "keyword="2007"" is specified as a search criterion for example, files that contains the character "2007" can be determined to be the matching files, whereas when "keyword not = 2007" is specified as a search criterion, files not containing the character "2007" can be determined to be the matching files. Alternatively, keyword conditions can be created by combining various Boolean expressions.

Next, if the keyword conditions match (if the answer to S702 is YES), the search means 62 sets the selected files as the target files to be sent (S703), and if not (if the answer to S702 is NO), the search means 62 does not set the selected files as the target files to be sent (S704).

### (2) The Second Embodiment

### <Data Structure of Index File>

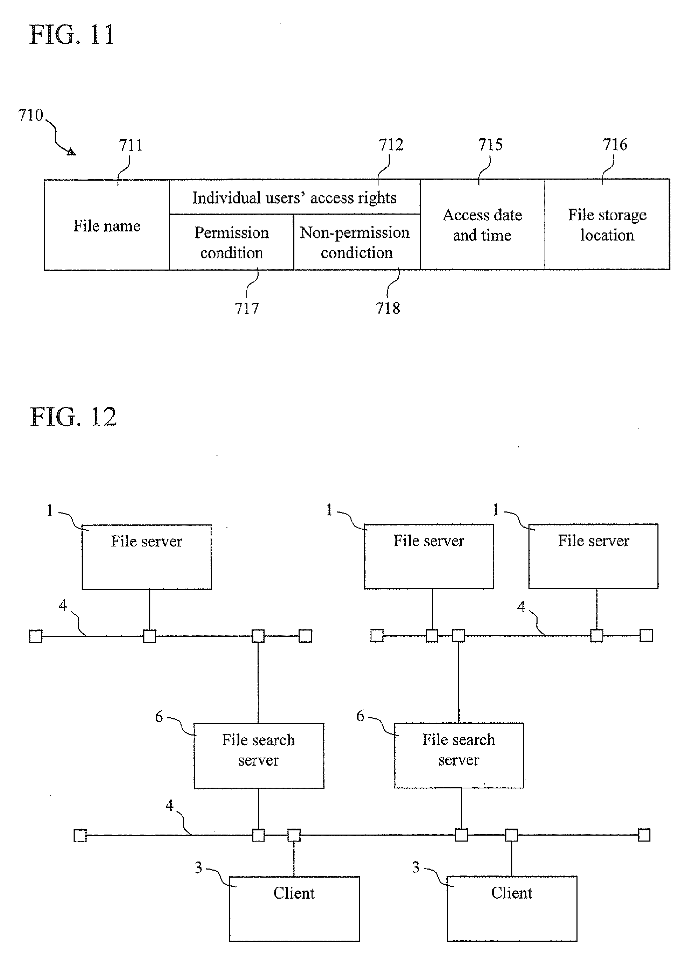

FIG. 11 illustrates the data structure of the index file 71 in accordance with the second embodiment of the present invention. It should be noted that since the system configuration of a file search system of the second embodiment is the same as that of the first embodiment (FIG. 1), description thereof will be omitted.

The data structure of the index file 71 of the second embodiment differs from that of the first embodiment only in the structure of the individual users' access rights 712, and the other structures are the same. That is, in the first embodiment, the individual users' access rights 712 are set by associating all of the user IDs 713 with the read right information 714. Such a method is advantageous in that the presence or absence of read rights can be easily determined in execution of a search. In particular, such a method is desirably used when the total number of user IDs 713 is small (for example, not more than 100) and also when there are no new users to be added, for example.

However, the number of users of the file server 1 is typically large (for example, 1000 or more) in many cases, and in such cases, if all of the user IDs 713 are to be associated with the read right information 714, the storage size of the individual users' access rights 712 would become disadvantageously large.

Further, if the content of the user management table 210 is changed after the creation of the index records 710 due to the addition of new users of the file server 1, for example, the actual read rights after the change will differ from the individual users' access rights 712. In such a case, a problem will arise that even if a user who is authorized to read a given file executes a search for the file, such a file cannot be displayed as a search result. Such a problem can be solved by, for example, running a process of monitoring the presence or absence of changes in the user management table 210 on the file server 1 and appropriately updating the individual users' access rights 712 of the index record 710 each time the content of the user management table 210 is changed. However, such a method could increase the load on the file server 1.

Thus, in order to solve the aforementioned problem without increasing the load on the file server 1, it would be desirable not to set the individual users' access rights 712 by associating all of the user IDs 713 with the read right information 714 but to have users who are authorized to read the relevant file be represented by a Boolean expression that does not depend on the user ID to the greatest possible extent and to set such a Boolean expression as the individual users' access rights 712. For example, when a user who is authorized to read a given folder 1 is represented by a Boolean expression "condition1" and a user who is authorized to read a folder 2 immediately following the folder 1 is represented by a Boolean expression "condition2" according to the read right information 224, users who are authorized to read the folder 2 are represented by a Boolean expression "condition1" & "condition2."

Thus, a Boolean expression that represents users who are authorized to read a given file can be determined by combining Boolean expressions, sequentially from the uppermost folder to the lower folders of the absolute path, with & (and) operators. When such a Boolean expression is set as the individual users' access rights 712 and the search means 62 analyzes the Boolean expression set as the individual users' access rights 712 to determine the presence or absence of read rights, it becomes possible to display as search results only the files that the operator of the client 3 is authorized to read, on the display device 33.

It should be noted that when Boolean expressions are simply combined with & (and) operators in the aforementioned manner, the resulting Boolean expression could be longer as the folder hierarchy is deeper. As a result, not only does the size of the individual users' access rights 712 increase, but also the process of analyzing the Boolean expression with the search means 62 becomes complex.

Thus, a Boolean expression that is as short and simple as possible is desirably used. In order to realize such a Boolean expression, information that identifies users who are authorized to read a given file or folder as well as information that identifies users who are not authorized to read such a file or folder are stored in this embodiment. Accordingly, it becomes possible to use a simple method that includes searching for a character string with reference to the information that identifies a user upon execution of a search, and determine if the user of the client 3 is authorized to read the file or folder.

Hereinafter, a method of setting the individual users' access rights 712 as well as a method of determining the presence or absence of read rights in such setting in accordance with the second embodiment will be described.

The read right information 224 in the file management table 220 can have only eight types of setting as follows: "-, -,-," "-, -, r," "-, r, -," "-, r, r," "r, -, -, "r, -, r," "r, r, -," and "r, r, r." It should be noted that "-" in such setting represents a space, that is, no one is authorized to read a given folder or file.

In each of the eight types of setting, provided that the owner and user group of the relevant folder or file are represented as "the_user" and "the_group," respectively, information about the absence of corresponding users is represented as "no_user," and all of the users are represented as "all_users," users who are unauthorized or authorized to read the relevant folder or file will be as those described in i) to viii) below.

In i) to viii) below, a character string inside the parentheses represents a character string set as a permission condition 717 and a non-permission condition 718. For example, in the following case: "users unauthorized to read: "no_user"," no data is set as the non-permission condition 718 (that is, a space is set); in the following case: "users unauthorized to read: "the_user" or "the_group"," "Uthe_user Gthe_group" is set as the non-permission condition 718 (the user ID of "the_user" begins with the delimiter "U," the group ID of "the_group" begins with the delimiter "G," and a space is interposed in between); and in the following case: "users authorized to read: "all_users"," a character string "all_users" is set as the permission condition 717. The other settings are also similar. It should be noted that "U" and "G" denote delimiters, and "Uthe_user" and "Gthe_group" are represented as, for example, "U 1" and "G 1" ("the_user" and "the_group" correspond to numeric characters), respectively.

Herein, whether or not a given user is authorized to read a folder or file is determined as follows. First, the user ID of the user as well as the group IDs of all user groups to which the user belongs are obtained. The group IDs of all user groups to which the user belongs can be obtained with reference to the user management table 210. In the following description, the obtained user ID is represented as "user" and the obtained group ID is represented as "grp1"..."grpN."

Next, it is determined that no one is authorized to read the relevant folder or file if the character string set as the non-permission condition 718 includes all of the following (*N* + 1) character strings: "Uuser" (a character string of the user ID of the "user" beginning with the delimiter U") and a"Ggrp1" (a character string of the group ID of the "grp1" beginning with the delimiter "G")..."GgrpN" but include none of the following N character strings: "UuserGgrp1" (a character string obtained by combining a character string of the user ID of the "user" beginning with the delimiter "U" and a character string of the group ID of the "grp1" beginning with the delimiter "G")..."UuserGgrpN."

If it is not determined that no one is authorized to read the relevant folder or file, it is then determined if the character string set as the permission condition 717 includes any of the following *m* (*m* = 0 or *m* > 1) combined character strings: ("Uuser," "UuserGgrp1," "UuserGgrp1Ggrp2," and the like) selected from among the "Uuser" and *N* character strings including "Ggrp1"..."GgrpN" or include any of the following *m* (*m* > 1) combined character strings: ("Ggrp1," "Ggrp1Ggrp2," and the like) selected from among the *N* character strings including "Ggrpl"..."GgrpN." If the character string set as the permission condition 717 is determined to include any of the aforementioned character strings, it is determined that there is/are a user(s) who is/are authorized to read the relevant folder or file, whereas if not, it is determined that no one is authorized to read the relevant folder or file.

Hereinafter, settings of the permission condition 717 and the non-permission condition 718 will be described. In this embodiment, users who are authorized to read (access) a given folder or file are determined by the permission condition 717 and the non-permission condition 718 combined with the "and" operator. Character strings inside the parentheses represent the method of representation on an index file.
i) When the read right information 224 is "-, -, -":
   Users unauthorized to read: "no_user" ( )
   Users authorized to read: "no_user" ( )
ii) When the read right information 224 is "-, -, r":
   Users unauthorized to read: "the_user" or "the_group" (Uthe_user Gthe_group)
   Users authorized to read: "all_users" (all_users)
iii) When the read right information 224 is "- , r, -":
   Users unauthorized to read: "the_user" (Uthe_user)
   Users authorized to read: "the_group" (Gthe_group)
iv) When the read right information 224 is "-, r, r":
   Users unauthorized to read: "the_user" (Uthe_user)
   Users authorized to read: "all_users" (all_users)
v) When the read right information 224 is "r, -, -":
   Users unauthorized to read: "no_user" ( )
   Users authorized to read: "the_user" (Uthe_user)
vi) When the read right information 224 is "r ,- , r":
   Users unauthorized to read: "the_group" and not "the_user"
      (Gthe_group Uthe_userGthe_group)
   Users authorized to read: "all_users" (all_users)
vii) When the read right information 224 is "r, r, -":
   Users unauthorized to read: "no_user" ( )
   Users authorized to read: "the_user" or "the_group" (Uthe_user Gthe_group)
viii) When the read right information 224 is "r, r, r":
   Users unauthorized to read: "no_user" ( )
   Users authorized to read: "all_users" (all_users)
   Herein, if the permission condition 717 and the non-permission condition 718 of a "folder1" in a folder hierarchy of, for example, "/folder1/folder2" correspond to any of the aforementioned i) to viii), the permission condition 717 and the non-permission condition 718 of the "folder2" can be determined by combining the permission condition 717 and the non-permission condition 718 (any of the aforementioned i) to viii)) of the "folder2" derived from the read right information 224 of the "folder2,"
   The non-permission condition 718 of the "folder1" is indicated by a space, user ID, group ID, or a combined character string of user IDs and group IDs with spaces interposed in between. The non-permission condition 718 of the "folder2" can be determined from, if the character string of the non-permission condition 718 of the "folder1" is indicated by a space, the character string of the non-permission condition 718 of the "folder2" derived from the read right information 224 of the "folder2," and can be determined by, if the character string of the non-permission condition 718 of the "folder1" is not indicated by a space, combining the character string of the non-permission condition 718 of the "folder1" with the character string of the non-permission condition 718 of the "folder2" derived from the read right information 224 of the "folder2" with a space interposed in between.

Thus, the non-permission condition 718 of the "folder2" is also indicated by a space, user ID, group ID, or a combined character string of user IDs and group IDs with spaces interposed in between. In addition, the non-permission condition 718 of the uppermost folder "/" (root) is indicated by a space, user ID, group ID, or a combined character string of user IDs and group IDs with spaces interposed in between. Accordingly, the non-permission conditions 718 of all of the folders are similarly indicated by a space, user ID, group ID, or a combined character string of user IDs and group IDs with spaces interposed in between. Further, the non-permission condition 718 of each file in the folder is also indicated by a space, user ID, group ID, or a combined character string of user IDs and group IDs with spaces interposed in between.

The permission condition 717 of the "folder1" is indicated by a space, "all_users," or a combined character string of user IDs and group IDs with spaces interposed in between (which include all of the following cases: the user ID only, the group ID only, and a combined character string of user IDs and group IDs as described below). The permission condition 717 of the "folder2" can be determined from, if the permission condition 717 of the "folder1" is indicated by a space, the space, and can be determined from, if the permission condition 717 of the "folder1" is "all_users," a character string of the permission condition 717 of the "folder2" derived from the read right information 224 of the "folder2."

If the permission condition 717 of the "folder1" is indicated by a combined character string of user IDs and group IDs with spaces interposed in between, the permission condition 717 of the "folder2" can be determined from, if the character string of the permission condition 717 of the "folder2" derived from the read right information 224 of the "folder2" is indicated by a space, the space, and can be determined from, if the character string of the permission condition 717 of the "folder2" derived from the read right information 224 of the "folder2" is "all_users," the permission condition 717 of the "folder1."

In addition, if each of the permission condition 717 of the "folder1" and the permission condition 717 of the "folder2" derived from the read right information 224 of the "folder2" is a combined character string of user IDs and group IDs with spaces interposed in between, the permission condition 717 of the "folder2" can be determined from a character string obtained by combining the user IDs and group IDs, excluding therefrom the identical combination results or impossible combination results as the permission condition 717, and combining the remainders with spaces interposed therebetween.

For example, a case is considered in which the permission condition 717 of the "folder1" is indicated by "Uthe_user1 Gthe_group1" and the permission condition 717 of the "folder2" derived from the read right information 224 of the "folder2" is indicated by "Uthe_user2 Gthe_group2."

First, the permission condition 717 of the "folder2" is represented as "(user1 or group1)and(user2 or group2)." Thus, if "the_user1" and "the_user2" are identical, the permission condition 717 of the "folder2" is represented as "Uthe_user1 Uthe_user1Gthe_group1 Uthe_user1Gthe_group2 Gthe_group1Gthe_group2." Meanwhile, if "the_user1" and "the_user2" are different, the permission condition 717 of the "folder2" is represented as "Uthe_user1Gthe_group2 Uthe_user2Gthe_group1 Gthe_group1Gthe_group2." It should be noted that if "the_groupl" and "the_group2" are identical, the permission condition 717 of the "folder1" and the permission condition 717 of the "folder2" are represented as "Uthe_user1 Uthe_user1Gthe_group1 Gthe_group1" and "Uthe_user1Gthe_group1 Uthe_user2Gthe_group1 Gthe _group1," respectively.

As described above, the permission condition 717 of the "folder2" is also indicated by a space, "all_users," or a combined character string of user IDs and group IDs with spaces interposed in between (which include all of the following cases: the user ID only, the group ID only, and a combined character string of user IDs and group IDs). In addition, the permission condition 717 of the uppermost folder "/" (root) is indicated by a space, "all_users," or a combined character string of user IDs and group IDs with spaces interposed in between. Accordingly, the permission conditions 717 of all of the folders are indicated by a space, "all_users," or a combined character string of user IDs and group IDs with spaces interposed in between. Further, the permission condition 717 of each file in the folder is also indicated by a space, "all_users," or a combined character string of user IDs and group IDs with spaces interposed in between.

According to the aforementioned method, the permission condition 717 and the non-permission condition 718 of "the_file" having an absolute path of, for example, "/folder1/folder2/···/folderN/the_file" can be set by determining the permission condition 717 and the non-permission condition 718 of each folder sequentially from the upper folders.

In the second embodiment, the permission condition (the condition for permitting read) 717 and the non-permission condition (the condition for not permitting read) 718 are set as the individual users' access rights 712 as described above.

Thus, the search means 62, when selecting a file (the index record 710) that the operator of the client 3 is authorized to read and that matches the search criteria included in a search request (S601 in FIG. 6), can determine, with reference to the user ID included in the search request received from the client 3 (i.e., the user ID entered into a login screen) as well as the group ID of a user group to which the user belongs, if the user is authorized to read the selected file by searching for the character strings of the permission condition 717 and the non-permission condition 718.

That is, as in the first embodiment, by storing information (the permission condition 717) that identifies users who are authorized to read a given file or folder as well as information (the non-permission condition 718) that identifies users who are not authorized to read such a file or folder, it is possible to determine if the user of the client 3 is authorized to read the file or folder with a simple method that includes searching for a character string with reference to the information (the user ID and group ID) that identifies the user upon execution of a search. Further, it is also possible to easily determine persons who are authorized to read a given file or folder only by adding persons who are not authorized to read such a file or folder to the non-permission condition 718. Accordingly, conditions can be easily changed and the load on the file server 1 can be reduced. The specific search method is as described above.

### (3) The Third Embodiment

FIG. 12 illustrates the schematic configuration of a file search system in accordance with the third embodiment of the present invention.

In the third embodiment, only the clients 3, the file servers 1, the file search servers 6, and the LAN 4 are illustrated. However, illustration of each storage device, means, and the like is just omitted, and each client 3, each file server 1, and each file search server 6 have the same configuration as those of the first and second embodiments. As illustrated in FIG. 12, each of the multiple file search servers 6 is connected to one or more file servers 1 via the LAN 4 in a mutually communicable manner so that a search request can be sent from each client 3 to each of the multiple file search servers 6.

Either one of the index file data structure illustrated in the first embodiment or that illustrated in the second embodiment (FIG. 3 or FIG. 11) can be used.

It should be noted that the file search system in accordance with the present invention has a configuration in which multiple file servers and multiple file search servers are provided in the system. However, the configuration of FIG. 12 is only exemplary and various configurations other than that illustrated in FIG. 12 can be used.

### (4) Supplement

It should be noted that the present invention can also be realized by a program code of software that implements the functions of the embodiments. In such a case, a storage medium having recorded thereon the program code is provided to a system or apparatus, and a computer (or a CPU or MPU) in the system or apparatus reads the program code stored in the storage medium. In this case, the program code itself read from the storage medium implements the functions of the aforementioned embodiments, and the program code itself and the storage medium having recorded thereon the program code constitute the present invention. As the storage medium for supplying such a program code, for example, a flexible disk, CD-ROM, DVD-ROM, hard disk, optical disk, magneto-optical disk, CD-R, magnetic tape, nonvolatile memory card, ROM, or the like is used.

Further, based on an instruction of the program code, an OS (operating system) running on the computer or the like may perform some or all of actual processes, and the functions of the aforementioned embodiments may be implemented by those processes. Furthermore, after the program code read from the storage medium is written to the memory in the computer, the CPU or the like of the computer may, based on the instruction of the program code, perform some or all of the actual processes, and the functions of the aforementioned embodiments may be implemented by those processes.

Moreover, the program code of the software that implements the functions of the embodiments may be distributed via a network, and thereby stored in storage means such as the hard disk or memory in the system or apparatus, or the storage medium such as a CD-RW or CD-R, and at the point of use, the computer (or the CPU or MPU) in the system or apparatus may read the program code stored in the storage means or storage medium and execute the program code.

## Claims

1. A file search system in which a file search server executes a search in response to a search request and presents a search result to a client device, and the client device obtains a desired file from a file server,
wherein:
the file server comprises a search-target-file storage having stored therein multiple search target files,
the file search server comprises an index file storage having stored therein an index file for the multiple search target files, and search means that executes a search of the index file in accordance with the search request,
the index file includes file access right information that is created by taking into consideration the right of access to each of the search target files as well as the rights of access to folders related to the file, and
the file search server presents the search result only to a client device operated by a user who is authorized to access the file.

2. The file search system according to claim 1, wherein the file access right information includes information that identifies if each of users is authorized to access each of the search target files as well as all of the folders related to the file.

3. The file search system according to claim 1, wherein:
the file access right information includes first information indicating conditions of a user who is authorized to access each of the search target files as well as all of the folders related to the file, and second information indicating conditions of a user who is not authorized to access such a file or folders, and
AND operation of the first information and the second information provides a user who is authorized to access the file.

4. The file search system according to any one of claims 1 to 3, wherein:
the file search server further comprises index creation means that creates the index file, and
the index creation means creates the index file with reference to a system file of the file server, the system file including a management table for managing users and the right of access to each folder and file.

5. The file search system according to claim 4, wherein the index creation means updates the index file by referring to the search-target-file storage at given timings.

6. A file search server device that executes a search in response to a search request from a client device and presents a search result to the client device, the file search server device comprising:
an index file storage having stored therein an index file for multiple search target files that are stored in a file server; and
search means that executes a search of the index file in accordance with the search request,
wherein:
the index file includes file access right information that is created by taking into consideration the right of access to each of the search target files as well as the rights of access to folders related to the file, and
the file search server device presents the search result only to a client device operated by a user who is authorized to access the file.

7. The file search server device according to claim 6, wherein the file access right information includes information that identifies if each of users is authorized to access each of the search target files as well as all of the folders related to the file.

8. The file search server device according to claim 6, wherein the file access right information includes first information indicating conditions of a user who is authorized to access each of the search target files as well as all of the folders related to the file, and second information indicating conditions of a user who is not authorized to access such a file or folders, and
AND operation of the first information and the second information provides a user who is authorized to access the file.

9. The file search server device according to any one of claims 6 to 8, further comprising index creation means that creates the index file, and
the index creation means creates the index file with reference to a system file of the file server, the system file including a management table for managing users and the right of access to each folder and file.

10. The file search server device according to claim 9, wherein the index creation means updates the index file by referring to the search-target-file storage at given timings.
